# EUROPÄISCHE PATENTSCHRIFT

(11) **EP 3 323 490 B1**
(45) Veröffentlichungstag und Bekanntmachung des Hinweises auf die Patenterteilung: **02.12.2020**
(21) Anmeldenummer: 17200526.6
(22) Anmeldetag: 08.11.2017
(51) Int. Cl.: B01D 33/46, B01D 33/76, B04B 7/18, B04B 11/08

(54) **FILTERZENTRIFUGE**
FILTER CENTRIFUGE
CENTRIFUGEUSE FILTRANTE

(30) Priorität: 21.11.2016 DE 102016122336
(43) Veröffentlichungstag der Anmeldung: 23.05.2018
(73) Patentinhaber: Andritz KMPT GmbH, 85256 Vierkirchen (DE)
(72) Erfinder: GRIM, Gunnar, 85258 Weichs (DE)
(74) Vertreter: Viering, Jentschura & Partner mbB Patent- und Rechtsanwälte

(56) Entgegenhaltungen:
- JP-A- 2004 188 322
- JP-A- 2005 021 849
- JP-A- 2005 021 852

## Beschreibung

Die vorliegende Erfindung betrifft eine Filterzentrifuge zum Ausfiltern eines Feststoffmaterials aus einer Suspension.

Filterzentrifugen werden z.B. bei chemischen, pharmazeutischen und biologischen Anwendungen im industriellen Maßstab zur Filtration von Suspensionen (Fest-FlüssigGemischen) eingesetzt.

Als eine Bauform einer herkömmlichen Filterzentrifuge ist zum Beispiel eine diskontinuierliche Schälzentrifuge bekannt. Diese weist eine in einem Gehäuse drehbar gelagerte Filtertrommel auf, welcher mittels einer Suspension-Zuführvorrichtung, welche in die Filtertrommel hineinragt, eine zu filtrierende Suspension zugeführt wird. Ferner ragt, zumindest in einem Austragebetrieb, in welchem das ausgefilterte Filtermaterial aus der Filtertrommel ausgetragen wird, eine Feststoffmaterial-Austragvorrichtung in die Filtertrommel hinein, mittels welcher der ausgefilterte Feststoff aus der Filtertrommel ausgetragen wird. Ferner weist die Schälzentrifuge an einer Innenwand der Filtertrommel ein Filtermittel auf, zum Beispiel ein Filtertuch, welches zum Ausfiltern des Feststoffmaterials aus der Suspension dient und welches, zum Beispiel mittels Spannmitteln, in der Filtertrommel gehalten ist.

Im normalen/regulären Filterbetrieb wird der sich drehenden Filtertrommel die zu filtrierende Suspension über die Suspension-Zuführvorrichtung zugeführt. Aufgrund der Drehung der Filtertrommel wird die Suspension radial nach außen zur Innenwand der Filtertrommel und somit zum Filtermittel gedrückt. Die Flüssigkeit der Suspension durchdringt das Filtermittel sowie das daran ausgefilterte Feststoffmaterial und wird aus der Filtertrommel abgeführt bzw. herausgeschleudert (zum Beispiel mittels in der Filtertrommel vorgesehenen Drainagebohrungen oder -löchern). Das ausgefilterte Feststoffmaterial verbleibt als Filterkuchen an dem Filtermittel und wird schließlich, zum Beispiel wenn ein geforderter Trennungsgrad von Flüssigkeit und Feststoffmaterial durch Ausschleudern der Flüssigkeit erreicht ist, im Austragebetrieb durch die Feststoffmaterial-Austragvorrichtung mittels eines Schälmessers, welches den Filterkuchen abschält, aus der Filtertrommel ausgetragen.

Beispiele aus dem Stand der Technik sind, z.B., in den Dokumenten JP 2005 021852 A, JP 2005 021849 A und JP 2004 188322 A beschrieben, wobei JP 2005 021852 A eine Zentrifuge offenbart, die mit einer Restkuchenausgabevorrichtung zum Ausgeben des in einem Korb verbleibenden Restkuchens ausgestattet ist, wobei JP 2005 021849 A eine Horizontal-Zentrifuge offenbart, in der der Filterkuchen in einem Korb unter Verwendung eines Kuchen-Saugrohrs zurückgewonnen werden kann, und wobei JP 2004 188322 A eine Horizontal-Zentrifugalfiltrationsvorrichtung offenbart.

Durch die Erfindung wird eine Filterzentrifuge zum Ausfiltern eines Feststoffmaterials aus einer Suspension geschaffen, die im Hinblick auf ein Austragen des ausgefilterten Feststoffmaterials aus der Filtertrommel verbessert ist.

Hierzu stellt die vorliegende Erfindung eine Filterzentrifuge zum Ausfiltern eines Feststoffmaterials aus einer Suspension gemäß Anspruch 1 bereit. Weitere Ausgestaltungen der erfindungsgemäßen Filterzentrifuge sind in den abhängigen Ansprüchen beschrieben.

Gemäß verschiedenen Aspekten der vorliegenden Erfindung hat eine Filterzentrifuge zum Ausfiltern eines Feststoffmaterials aus einer Suspension, die von dem Feststoffmaterial und einer Flüssigkeit gebildet ist, eine Filtertrommel, welche eine Filtertrommelinnenfläche und eine Filtertrommellängsachse definiert, die in einem Winkel von nicht mehr als 30° zur Horizontalen angeordnet ist, und welche um die Filtertrommellängsachse, zum Beispiel mittels eines Drehantriebs, zum Beispiel in eine Filtertrommelbetriebsdrehrichtung, drehbar ist. Die Filtertrommellängsachse kann zum Beispiel zumindest im Wesentlichen horizontal angeordnet sein. Die Filterzentrifuge hat ferner eine Feststoffmaterial-Austragevorrichtung zum Austragen des ausgefilterten Feststoffmaterials aus der Filtertrommel im Rahmen eines Austragebetriebs der Filterzentrifuge. Die Feststoffmaterial-Austragevorrichtung weist einen Austragevorrichtungs-Arm mit einem freien Armende und eine Feststoffmaterial-Austrageleitung auf, welche an dem Arm ausgebildet ist (z.B. indem sie separat vorgesehen und an dem Arm angebracht ist, oder z.B. indem sie von dem Arm selbst ausgebildet bzw. in diesem integriert ausgebildet ist) und über welche das ausgefilterte Feststoffmaterial aus der Filtertrommel herausführbar ist (bzw. herausgeführt wird) und welche eine Feststoffmaterial-Einlassöffnung hat, welche benachbart zu dem freien Armende angeordnet ist und über welche das ausgefilterte Feststoffmaterial von der Filtertrommel in die Feststoffmaterial-Austrageleitung gelangen kann. Der Austragevorrichtungs-Arm ist, zum Beispiel mittels eines an eine Steuervorrichtung angeschlossenen Antriebs, gesteuert bewegbar eingerichtet, sodass im Austragebetrieb die Feststoffmaterial-Einlassöffnung mittels einer Bewegung des Austragevorrichtungs-Arms (z.B. radial) in die Nähe der Filtertrommelinnenfläche bewegbar ist (bzw. bewegt wird), um das an der Innenfläche der Filtertrommel anhaftende Feststoffmaterial aufnehmen zu können. Im Austragebetrieb ist die in die Nähe der Filtertrommelinnenfläche bewegte Feststoffmaterial-Einlassöffnung bezüglich der Filtertrommellängsachse in der unteren Hälfte, zum Beispiel im unteren Drittel, zum Beispiel im unteren Viertel, zum Beispiel im unteren Achtel, der Filtertrommel angeordnet. Die Feststoffmaterial-Austrageleitung kann zum Beispiel von einem Rohr oder einem Schlauch gebildet sein.

Aufgrund der annähernd horizontalen Lage der Filtertrommellängsachse wird von der Trommelinnenfläche abgelöstes Feststoffmaterial sich im Wesentlichen entlang einem unteren Abschnitt einer/der Filtertrommelinnenumfangsfläche befinden; durch die Anordnung der Feststoffmaterial-Einlassöffnung im entsprechenden unteren Bereich der Filtertrommel kann daher zumindest ein Großteil des abgelösten Feststoffmaterials erfasst und aus der Filtertrommel abgeführt werden.

Die Filterzentrifuge kann ferner zum Beispiel aufweisen eine an der Filtertrommel befestigte Antriebswelle, die eine Wellenachse definiert, die zumindest im Wesentlichen deckungsgleich mit der Filtertrommellängssachse ist, und einen auf dem Boden befestigbaren (bzw. befestigten) Rahmen mit Wellenlagern, in denen die Antriebswelle derart angeordnet bzw. gelagert ist, dass die Filtertrommellängsachse in einem Winkel von nicht mehr als 30° zur Horizontalen angeordnet ist oder dass die Filtertrommellängsachse zumindest im Wesentlichen horizontal angeordnet ist.

Im Austragebetrieb kann die in die Nähe der Filtertrommelinnenfläche bewegte Feststoffmaterial-Einlassöffnung optional in einem Winkelbereich angeordnet sein, der sich um die Filtertrommellängsachse herum um nicht mehr als 45°, zum Beispiel um nicht mehr als 30°, zum Beispiel um nicht mehr als 15°, zur Vertikalen erstreckt. Das heißt, die Feststoffmaterial-Einlassöffnung befindet sich dann zum Beispiel benachbart/nahe zu einem Bogensegment einer/der Filtertrommelumfangswand, welches sich ausgehend vom unteren Scheitel der Filtertrommel bezüglich der Vertikalen um einen Winkel von nicht mehr als 45°, 30° oder 15° erstreckt.

Die Filterzentrifuge kann ferner optional aufweisen eine Druckdifferenz-Erzeugungsvorrichtung zum Erzeugen einer Druckdifferenz zwischen der Feststoffmaterial-Einlassöffnung und einem Inneren der Feststoffmaterial-Austrageleitung derart, dass der Druck in der Feststoffmaterial-Austrageleitung kleiner ist als an der Feststoffmaterial-Einlassöffnung bzw. als in einer/der äußeren Umgebung der Feststoffmaterial-Einlassöffnung. Die Druckdifferenz kann zum Beispiel erzeugt werden durch mit Druck Beaufschlagen der/einer die Feststoffmaterial-Einlassöffnung umgebenden äußeren Umgebung und/oder durch mit Vakuum Beaufschlagen des Inneren der Feststoffmaterial-Austrageleitung. Die Druckdifferenz-Erzeugungsvorrichtung kann zum Beispiel einen Kompressor und/oder eine Vakuumpumpe aufweisen. Das Austragen des ausgefilterten Feststoffmaterials aus der Filtertrommel kann zum Beispiel durch die Druckdifferenz bewirkt sein. Durch die Druckdifferenz kann das ausgefilterte Feststoffmaterial zum Beispiel aus der Filtertrommel ausgesaugt werden. Durch die Druckdifferenz kann das ausgefilterte Feststoffmaterial zum Beispiel in die Feststoffmaterial-Austrageleitung eingesaugt werden. Durch die Druckdifferenz zwischen (der äußeren Umgebung) der Feststoffmaterial-Einlassöffnung und dem Inneren der Feststoffmaterial-Austrageleitung kann zum Beispiel ein Fluidstrom (zum Beispiel ein Gasstrom) an/in der Feststoffmaterial-Einlassöffnung und/oder an/in einem Bereich, der benachbart zu der Feststoffmaterial-Einlassöffnung ist, erzeugt werden, wodurch das an der Innenfläche der Filtertrommel anhaftende Feststoffmaterial fluidisiert und in die Feststoffmaterial-Austrageleitung eingesaugt werden kann, wenn die Feststoffmaterial-Einlassöffnung im Austragebetrieb in die Nähe der Filtertrommelinnenfläche bewegt ist. Dadurch kann eine Grundschicht zumindest im Wesentlichen vollständig entfernt werden und ein Austragen des ausgefilterten Feststoffmaterials aus der Filtertrommel kann weiter verbessert sein. Hierbei ist eine solche Grundschicht zum Beispiel zu verstehen als eine Schicht des Filterkuchens, die nicht mechanisch, z.B. durch eine Klinge und/oder einen Schaber, von der Filtertrommelinnenfläche erfassbar und/oder ablösbar ist. Damit ist die Grundschicht z.B. eine unmittelbar auf dem Filtermedium aufliegende, nach einer mechanischen Abtragung noch auf der Filtertrommelinnenfläche vorliegende und/oder verbleibende Restschicht des Filterkuchens.

Die Feststoffmaterial-Austragevorrichtung weist ferner eine erste Klinge auf, welche eine erste Schneide definiert und welche benachbart zur Feststoffmaterial-Einlassöffnung angeordnet ist, wobei z.B. die erste Schneide zumindest im Austragebetrieb zumindest im Wesentlichen parallel zur Filtertrommellängsachse verläuft. Im Austragebetrieb kann die erste Klinge zum Beispiel in Filtertrommelbetriebsdrehrichtung hinter der Feststoffmaterial-Einlassöffnung angeordnet sein.

Die Feststoffmaterial-Austragevorrichtung kann optional eine zweite Klinge aufweisen, welche eine zweite Schneide definiert und welche benachbart zur Feststoffmaterial-Einlassöffnung und optional an die erste Klinge angrenzend angeordnet ist, wobei z.B. die zweite Schneide zumindest im Austragebetrieb zumindest im Wesentlichen orthogonal zur Filtertrommellängsachse verläuft.

Durch den an/in der Feststoffmaterial-Einlassöffnung und/oder an/in einem Bereich, der benachbart zu der Feststoffmaterial-Einlassöffnung ist, erzeugten Fluidstrom kann Schälstaub, der durch Abschälen des ausgefilterten Feststoffmaterials mit der ersten Klinge und/oder der zweiten Klinge erzeugt werden kann, in die Feststoffmaterial-Austrageleitung eingesaugt werden. Dadurch kann das ausgefilterte Feststoffmaterial zumindest im Wesentlichen vollständig aus der Filtertrommel entfernt werden und eine (wie oben erläuterte) Grundschicht kann zumindest im Wesentlichen vollständig entfernt werden und ein Austragen des ausgefilterten Feststoffmaterials aus der Filtertrommel kann weiter verbessert sein.

Die Feststoffmaterial-Einlassöffnung erstreckt sich in Richtung der Filtertrommellängsachse über weniger als die Hälfte, zum Beispiel über gleich oder weniger als ein Viertel, zum Beispiel über gleich oder weniger als ein Achtel, zum Beispiel über gleich oder weniger als ein Sechzehntel, der gesamten Länge der Innenfläche der Filtertrommel. Der Austragevorrichtungs-Arm ist zum Beispiel mittels des an die Steuervorrichtung angeschlossenen Antriebs, gesteuert translatorisch bewegbar eingerichtet, sodass im Austragebetrieb die Feststoffmaterial-Einlassöffnung (und z.B. die erste Klinge und z.B. die zweite Klinge) mittels einer translatorischen Bewegung des Austragevorrichtungs-Arms in Richtung parallel zur Filtertrommellängsachse bewegbar ist (bzw. bewegt wird) (gemeinsam bewegbar sind (bzw. bewegt werden)), um die Feststoffmaterial-Einlassöffnung (im Austragebetrieb) (und z.B. die erste Klinge und z.B. die zweite Klinge gemeinsam) parallel zur Filtertrommellängsachse zu verschieben. Im Austragebetrieb kann die zweite Klinge zum Beispiel in Richtung der translatorischen Bewegung hinter der Feststoffmaterial-Einlassöffnung angeordnet sein.

Die Filterzentrifuge kann optional eine Steuervorrichtung und einen Drehantrieb aufweisen, welcher an die Steuervorrichtung angeschlossen ist, wobei die Steuervorrichtung eingerichtet ist, um den Drehantrieb im Austragebetrieb so zu steuern, dass eine Drehgeschwindigkeit der Filtertrommel im Vergleich zu einem regulären Filterbetrieb kleiner ist, z.B. um ein mehrfaches kleiner ist. Im Austragebetrieb kann die Drehgeschwindigkeit der Filtertrommel zum Beispiel kleiner als 20% oder kleiner als 10% oder kleiner als 5% der Drehgeschwindigkeit der Filtertrommel im regulären Filterbetrieb sein.

Die Steuervorrichtung ist z.B. derart eingerichtet, dass von ihr der Drehantrieb im Austragebetrieb derart gesteuert wird (z.B. steuerbar ist), dass die Drehzahl der Filtertrommel derart ist, dass das Verhältnis zwischen der auf das in der Filtertrommel vorliegende ausgefilterte Feststoffmaterial wirkenden Zentrifugalbeschleunigung und der Erdbeschleunigung (bzw. dass die auf das Feststoffmaterial in der Filtertrommel wirkende G-Kraft) kleiner als eins (bzw. kleiner als 1G) ist. Dadurch bleibt, anders als im normalen Filterbetrieb, im Austragebetrieb das Feststoffmaterial nicht via Zentrifugalkraft an der Filtertrommelinnenfläche anhaften. Z.B. ist im Austragebetrieb das Verhältnis von Zentrifugalbeschleunigung, die auf das in der Filtertrommel vorliegende ausgefilterte Feststoffmaterial wirkt, zu Erdbeschleunigung (bzw. die auf das Feststoffmaterial in der Filtertrommel wirkende G-Kraft) kleiner gleich 0,5 (bzw. kleiner gleich 0,5G) oder z.B. kleiner gleich 0,1 (bzw. kleiner gleich 0,1G) oder z.B. kleiner gleich 0,05 (z.B. kleiner gleich 0,05G).

Dadurch wird zum Beispiel Schälstaub, der zum Beispiel beim Abschälen des ausgefilterten Feststoffmaterials entsteht, weniger in der Filtertrommel verwirbelt und zumindest im Wesentlichen vollständig in der Nähe der (z.B. im unteren Abschnitt der Filtertrommel angeordneten) Feststoffmaterial-Einlassöffnung gesammelt, sodass das ausgefilterte Feststoffmaterial zumindest im Wesentlichen vollständig in die Feststoffmaterial-Austrageleitung eingesaugt werden kann und dadurch zumindest im Wesentlich vollständig aus der Filtertrommel entfernt werden kann. Dadurch kann z.B. ein Austragen des ausgefilterten Feststoffmaterials aus der Filtertrommel weiter verbessert sein.

Die Feststoffmaterial-Austragevorrichtung kann optional einen an die Steuervorrichtung angeschlossenen Antrieb aufweisen, wobei die Steuervorrichtung eingerichtet ist, um den Antrieb so zu steuern, dass das freie Armende im Austragebetrieb mechanischen Druck auf das an der Innenfläche der Filtertrommel anhaftende Feststoffmaterial ausübt. Die Feststoffmaterial-Austragevorrichtung kann dabei zum Beispiel ohne Klinge, zum Beispiel ohne die erste und/oder die zweite Klinge, ausgestaltet sein. Die Filterzentrifuge kann zum Beispiel einen mit der Steuervorrichtung verbundenen Sensor zum Messen der Schichtdicke des an der Innenfläche der Filtertrommel anhaftenden Feststoffmaterials aufweisen, um im Austragebetrieb die Position des freien Armendes so zu steuern, dass das freie Armende in das an der Innenfläche der Filtertrommel anhaftende Feststoffmaterial eingreift, um dadurch einen mechanischen Druck darauf auszuüben. Die Feststoffmaterial-Austragevorrichtung kann zum Beispiel einen mit der Steuervorrichtung verbundenen Drucksensor bzw. Kraftsensor aufweisen, um im Austragebetrieb den Anpressdruck bzw. Aufpressdruck des freien Armendes auf das an der Innenfläche der Filtertrommel anhaftende Feststoffmaterial zu messen. Die Steuervorrichtung kann hierbei derart ausgebildet sein, dass von ihr die radiale Position des freien Armendes in Abhängigkeit von dem gemessenen Druck einstellbar ist, zum Beispiel unter Beibehaltung eines Referenzanpressdrucks. Durch den auf das an der Innenfläche der Filtertrommel anhaftende Feststoffmaterial ausgeübten mechanischen Druck kann das ausgefilterte Feststoffmaterial zum Beispiel fluidisiert werden bzw. kann das Fluidisieren des ausgefilterten Feststoffmaterials zum Beispiel verstärkt werden, wodurch ein Austragen des ausgefilterten Feststoffmaterials aus der Filtertrommel weiter verbessert sein kann.

Der Austragevorrichtungs-Arm kann optional ein Hohlkörper mit einem inneren Hohlraum sein und die Feststoffmaterial-Austrageleitung kann von dem Hohlraum des Hohlkörpers gebildet sein. Der Hohlkörper ist zum Beispiel ein stangenförmiges hohles Rohr, von dessen hohlem Inneren die Feststoffmaterial-Austrageleitung gebildet wird.

Der Austragevorrichtungs-Arm kann optional um eine im Abstand zum freien Armende angeordnete Schwenkachse schwenkbar sein, welche parallel zur Filtertrommellängsachse und versetzt dazu ist. Der Austragevorrichtungs-Arm kann, zum Beispiel mittels des/eines an die Steuervorrichtung angeschlossenen Antriebs, um die Schwenkachse geschwenkt werden, um die Feststoffmaterial-Einlassöffnung in die Nähe der Filtertrommelinnenfläche zu bewegen und/oder um die Feststoffmaterial-Einlassöffnung bezüglich der Filtertrommellängsachse in der unteren Hälfte oder dem unteren Drittel oder dem unteren Viertel oder dem unteren Achtel der Filtertrommel anzuordnen.

Die Erfindung stellt auch ein Verfahren zum Betreiben einer wie in dieser Anmeldung beschriebenen Filterzentrifuge bereit, wobei die Filtertrommel im Austragebetrieb mit einer derartigen Drehzahl gedreht wird, dass das Verhältnis zwischen der auf das in der Filtertrommel vorliegende ausgefilterte Feststoffmaterial wirkenden Zentrifugalbeschleunigung und der Erdbeschleunigung (bzw. dass die auf das ausgefilterte Feststoffmaterial in der Filtertrommel wirkende G-Kraft) kleiner als eins ist. Dadurch bleibt, anders als im normalen Filterbetrieb, im Austragebetrieb das Feststoffmaterial nicht via Zentrifugalkraft an der Filtertrommelinnenfläche anhaften. Beispielgebende, aber nicht einschränkende Ausführungsformen der vorliegenden Erfindung sind in den Figuren dargestellt und werden im Folgenden näher erläutert.

Es zeigen:
Figur 1 eine vereinfachte, schematische Ansicht einer Filtertrommel und einer Feststoffmaterial-Austragevorrichtung einer Filterzentrifuge gemäß einer ersten Ausführungsform der vorliegenden Erfindung,
Figur 2 eine vereinfachte, schematische, teilweise geschnittene Ansicht einer Filtertrommel und einer Feststoffmaterial-Austragevorrichtung einer Filterzentrifuge gemäß der ersten Ausführungsform der vorliegenden Erfindung,
Figur 3 eine vereinfachte, schematische, geschnittene Ansicht einer Filtertrommel und einer Feststoffmaterial-Austragevorrichtung einer Filterzentrifuge gemäß der ersten Ausführungsform der vorliegenden Erfindung,
Figur 4 eine vereinfachte, schematische, teilweise geschnittene Ansicht einer Filtertrommel und einer Feststoffmaterial-Austragevorrichtung einer Filterzentrifuge gemäß einer nicht erfindungsgemäßen Ausführungsform, und
Figur 5 eine vereinfachte, schematische, teilweise geschnittene Ansicht einer Filterzentrifuge gemäß der ersten Ausführungsform der vorliegenden Erfindung,

In den Figuren sind identische oder ähnliche Elemente mit identischen Bezugszeichen versehen, soweit dies zweckmäßig ist.

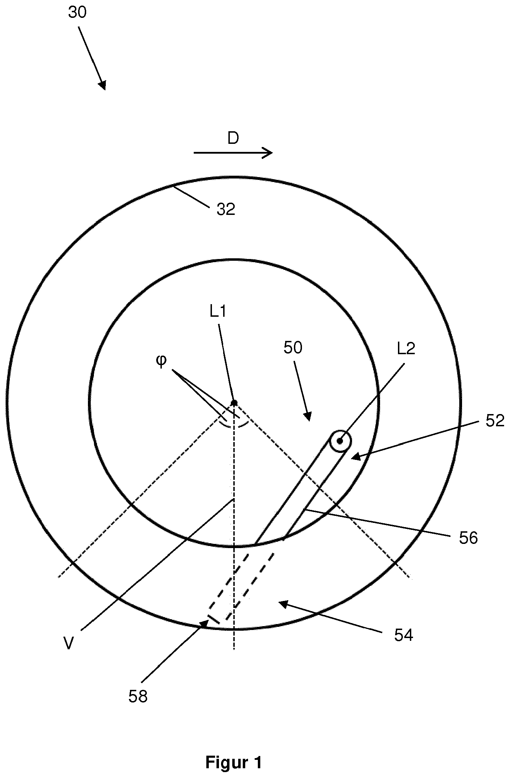

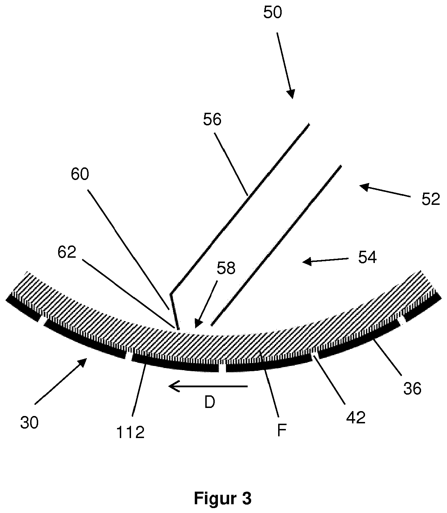

Wie in den Figuren 1-5 gezeigt weisen Filterzentrifugen 10 zum Ausfiltern eines Feststoffmaterials F aus einer Suspension, die von dem Feststoffmaterial F und einer Flüssigkeit gebildet ist, gemäß den diversen Ausführungsformen der Erfindung auf eine Filtertrommel 30, welche eine Filtertrommelinnenfläche 32 und eine Filtertrommellängsachse L1 definiert, die in einem Winkel von nicht mehr als 30° zur Horizontalen angeordnet ist, und welche um die Filtertrommellängsachse L1 drehbar ist, zum Beispiel mittels eines Drehantriebs 70, zum Beispiel in eine Filtertrommelbetriebsdrehrichtung D, und eine Feststoffmaterial-Austragevorrichtung 50 zum Austragen des ausgefilterten Feststoffmaterials F aus der Filtertrommel 30 im Rahmen eines Austragebetriebs der Filterzentrifuge 10, wobei die Feststoffmaterial-Austragevorrichtung 50 aufweist einen Austragevorrichtungs-Arm 52 mit einem freien Armende 54 und eine Feststoffmaterial-Austrageleitung 56, welche an dem Arm 52 angebracht ist (zum Beispiel in bzw. von dem Arm 52 ausgebildet wird) und über welche das ausgefilterte Feststoffmaterial F aus der Filtertrommel 30 herausführbar ist und welche eine Feststoffmaterial-Einlassöffnung 58 hat, welche benachbart zu dem freien Armende 54 angeordnet ist und über welche das ausgefilterte Feststoffmaterial F von der Filtertrommel 30 in die Feststoffmaterial-Austrageleitung 56 gelangen kann, wobei der Austragevorrichtungs-Arm 52 gesteuert bewegbar (zum Beispiel schwenkbar) eingerichtet ist, sodass im Austragebetrieb die Feststoffmaterial-Einlassöffnung 58 mittels einer Bewegung des Austragevorrichtungs-Arms 52 (z.B. radial) in die Nähe der Filtertrommelinnenfläche 32 bewegbar (zum Beispiel schwenkend bewegbar) ist, um das an der Innenfläche 32 der Filtertrommel 30 anhaftende Feststoffmaterial F aufnehmen zu können, und wobei im Austragebetrieb die in die Nähe der Filtertrommelinnenfläche 32 bewegte Feststoffmaterial-Einlassöffnung 58 bezüglich der Filtertrommellängsachse L1 in der unteren Hälfte (zum Beispiel im unteren Drittel) der Filtertrommel 30 angeordnet ist.

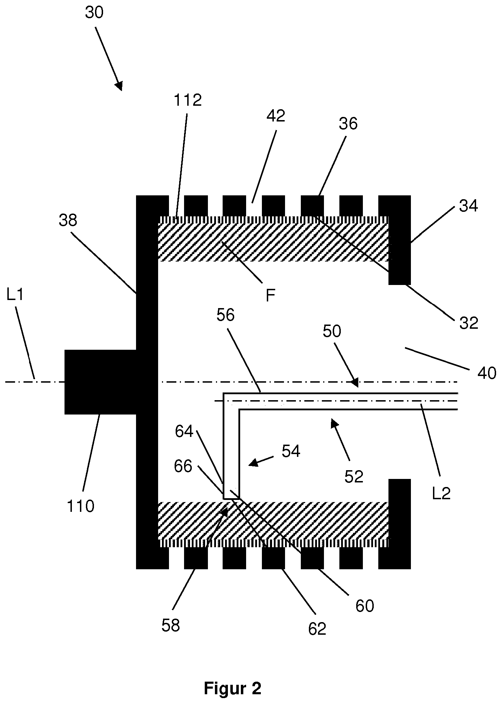

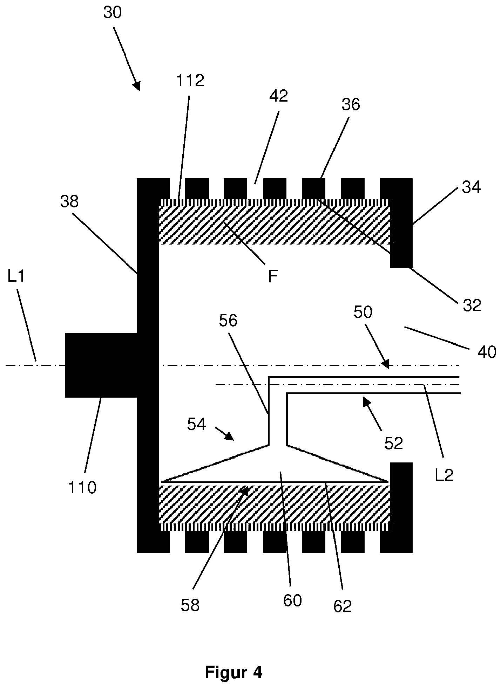

Die Filtertrommel 30 weist zum Beispiel auf einen Trommelmantel 36, welcher eine hohlzylindrische Form hat, einen Trommelboden 38, welcher an einem axialen Ende des Trommelmantels 36 (zum Beispiel in Figuren 2 und 4 an einem linken Ende des Trommelmantels 36) mit diesem verbunden ist und dieses Ende des Trommelmantels 36 verschließt, und einen Trommelkragen 34, welcher an dem anderen (bzw. gegenüberliegenden) axialen Ende des Trommelmantels 36 (zum Beispiel in Figuren 2 und 4 an einem rechten Ende des Trommelmantels 36) mit diesem verbunden ist und welcher eine zentrale Öffnung 40 aufweist. Der Trommelmantel 36 hat mehrere radiale Drainagebohrungen bzw. -löcher 42, durch die die Flüssigkeit der Suspension in einem regulären Filterbetrieb aus der Filtertrommel abgeführt bzw. herausgeschleudert wird. Die Filterzentrifuge weist ferner eine Antriebswelle 110 auf, welche an einer zentralen Position des Trommelbodens 38 mit diesem verbunden ist, sodass eine von der Antriebswelle 110 definierte Wellenachse zumindest im Wesentlichen deckungsgleich mit der Filtertrommellängsachse L1 ist. Die Filterzentrifuge kann ferner ein Filtermedium 112 (zum Beispiel ein Filtertuch, welches aus einem Gewebematerial hergestellt ist) aufweisen, welches in die Filtertrommel 30 an die Filtertrommelinnenfläche 32 anliegend eingesetzt ist, sodass die Drainagebohrungen bzw. -löcher 42 vollständig von dem Filtermedium 112 abgedeckt sind. Das Filtermedium 112 ist dazu eingerichtet, das Feststoffmaterial F aus der zu filtrierenden Suspension zurückzuhalten bzw. auszufiltern und die Flüssigkeit der zu filtrierenden Suspension durchzulassen.

Die Filterzentrifugen 10 gemäß den diversen Ausführungsformen können ferner aufweisen einen Drehantrieb 70, welcher mit der Antriebswelle 110 verbunden ist, und eine Steuervorrichtung S, welche mit dem Drehantrieb 70 verbunden ist. Die Steuervorrichtung S kann eingerichtet sein, um den Drehantrieb 70 im Austragebetrieb so zu steuern, dass eine Drehgeschwindigkeit der Filtertrommel 30 im Vergleich zu dem regulären Filterbetrieb um ein mehrfaches kleiner ist. Der Drehantrieb weist hier eine Antriebsvorrichtung 72 (zum Beispiel einen Antriebsmotor) und eine Übertragungsvorrichtung 74 auf, mit der ein Antriebsdrehmoment der Antriebsvorrichtung 72 auf die Antriebswelle 110 übertragen wird.

Der Austragevorrichtungs-Arm 52 ist um eine im Abstand zum freien Armende 54 angeordnete Schwenkachse L2 schwenkbar, welche parallel zur Filtertrommellängsachse L1 und versetzt dazu ist. Zur Schwenkbewegung und/oder zur später erläuterten translatorischen Bewegung des Austragevorrichtungs-Arms 52 kann die Feststoffmaterial-Austragevorrichtung 50 einen an die Steuervorrichtung S angeschlossenen Antrieb 90 aufweisen. Der Antrieb 90 kann eine Antriebsvorrichtung 92 (zum Beispiel einen elektrischen Antriebsmotor) und eine Übertragungsvorrichtung 94 aufweisen, die mit der Antriebsvorrichtung 92 und dem Austragevorrichtungs-Arm 52 verbunden ist und über die eine Antriebsbewegung von der Antriebsvorrichtung 92 auf den Austragevorrichtungs-Arm 52 übertragen wird. Durch die Schwenkbewegung kann die Feststoffmaterial-Einlassöffnung 58 (radial bezüglich der Filtertrommellängsachse) in die Nähe der Filtertrommelinnenfläche 32 bewegt werden und bezüglich der Filtertrommellängsachse L1 in der unteren Hälfte (bzw. hier im unteren Drittel) der Filtertrommel 30 angeordnet werden.

Die Steuervorrichtung S kann eingerichtet sein, um den Antrieb 90 so zu steuern, dass das freie Armende 54 im Austragebetrieb mechanischen Druck auf das an der Innenfläche 32 der Filtertrommel 30 anhaftende Feststoffmaterial F ausübt. Dazu kann die Filterzentrifuge 10 einen (nicht gezeigten) mit der Steuervorrichtung S verbundenen Sensor zum Messen der Schichtdicke des an der Innenfläche 32 der Filtertrommel 30 anhaftenden Feststoffmaterials F aufweisen, um im Austragebetrieb die Position des freien Armendes 54 so zu steuern, dass das freie Armende 54 in das an der Innenfläche 32 der Filtertrommel 30 anhaftende Feststoffmaterial F eingreift, um dadurch einen mechanischen Druck darauf auszuüben. Alternativ oder zusätzlich kann die Feststoffmaterial-Austragevorrichtung 50 einen (nicht gezeigten) mit der Steuervorrichtung S verbundenen Drucksensor bzw. Kraftsensor aufweisen, um im Austragebetrieb den Anpressdruck bzw. Aufpressdruck des freien Armendes 54 auf das an der Innenfläche 32 der Filtertrommel 30 anhaftende Feststoffmaterial F zu messen, wobei die Steuervorrichtung S derart ausgebildet sein kann, dass von ihr die radiale Position des freien Armendes 54 in Abhängigkeit von dem gemessenen Druck eingestellt wird, zum Beispiel unter Beibehaltung eines Referenzanpressdrucks.

Der Austragevorrichtungs-Arm 52 kann ein (zum Beispiel stangenförmiger) Hohlkörper mit einem inneren Hohlraum sein, und die Feststoffmaterial-Austrageleitung 56 kann von dem Hohlraum des Hohlkörpers gebildet sein.

Im Austragebetrieb ist die in die Nähe der Filtertrommelinnenfläche 32 bewegte Feststoffmaterial-Einlassöffnung 58 in einem Winkelbereich ϕ angeordnet, der sich um die Filtertrommellängsachse L1 herum um nicht mehr als 45° zur Vertikalen V erstreckt. Im regulären Filterbetrieb ist der Austragevorrichtungs-Arm 52 zum Beispiel so in der Filtertrommel 30 angeordnet, dass die Feststoffmaterial-Einlassöffnung 58 zumindest doppelt so weit von der Filtertrommelinnenfläche 32 entfernt ist wie im Austragebetrieb, um ein Eintreten bzw. Eindringen der Suspension in die Feststoffmaterial-Austrageleitung 56 durch die Feststoffmaterial-Einlassöffnung 58 zumindest zu behindern. Dazu kann der Austragevorrichtungs-Arm 52 zum Beispiel mittels des Antriebs 90 um die Schwenkachse L2 geschwenkt werden.

Die Feststoffmaterial-Austragevorrichtung 50 hat ferner eine erste Klinge 60, welche eine erste Schneide 62 definiert und welche benachbart zur Feststoffmaterial-Einlassöffnung 58 angeordnet ist, wobei die erste Schneide 62 im Austragebetrieb parallel zur Filtertrommellängsachse L1 verläuft. Durch die erste Klinge 60 kann das ausgefilterte Feststoffmaterial F im Austragebetrieb von der Innenfläche 32 der Filtertrommel 30 abgeschält werden, wenn das freie Armende 54 im Austragebetrieb in das ausgefilterte Feststoffmaterial F eingreift.

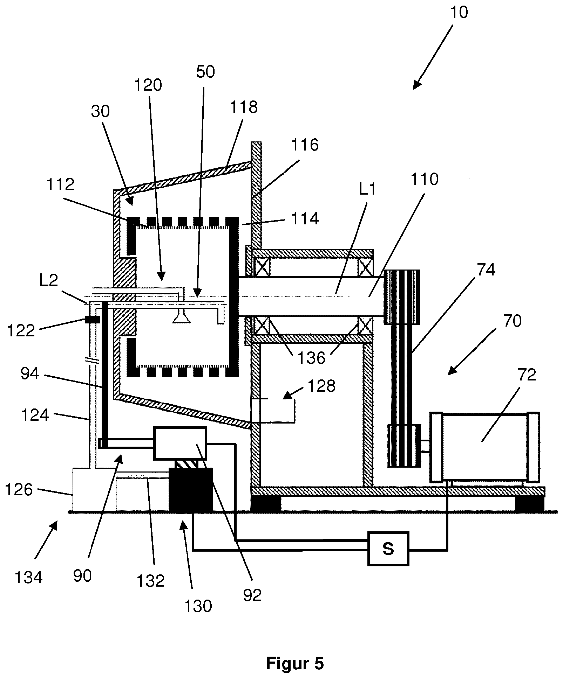

Die Filterzentrifugen 10 gemäß den diversen Ausführungsformen können ferner aufweisen eine Druckdifferenz-Erzeugungsvorrichtung 130 zum Erzeugen einer Druckdifferenz zwischen der Feststoffmaterial-Einlassöffnung 58 und einem Inneren der Feststoffmaterial-Austrageleitung 56 derart, dass der Druck in der Feststoffmaterial-Austrageleitung 56 kleiner ist als an der Feststoffmaterial-Einlassöffnung 58. In der in Figur 5 gezeigten Ausführungsform weist die Druckdifferenz-Erzeugungsvorrichtung 130 eine Vakuumpumpe auf. Die dort gezeigte Filterzentrifuge 10 weist ferner eine Feststoffmaterial-Sammelvorrichtung 134 auf, über welche die Druckdifferenz-Erzeugungsvorrichtung 130 mit der Feststoffmaterial-Austragevorrichtung 50 verbunden ist. Die Feststoffmaterial Sammelvorrichtung 134 hat eine Feststoffmaterial-Leitung 124, ein Verbindungsstück 122, einen Feststoffmaterial-Sammelbehälter 126 und eine Verbindungsleitung 132. Das Verbindungsstück 122 ist mit einem Ende der Feststoffmaterial-Leitung 124 verbunden und kann an die Feststoffmaterial-Austragevorrichtung 50 angeschlossen sein. Ein anderes Ende der Feststoffmaterial-Leitung 124 ist an den Feststoffmaterial-Sammelbehälter 126 angeschlossen. Ein Ende der Verbindungsleitung 132 ist an den Feststoffmaterial-Sammelbehälter 126 angeschlossen und ein anderes Ende der Verbindungsleitung 132 ist an die Druckdifferenz-Erzeugungsvorrichtung 130 angeschlossen. Dadurch kann die Feststoffmaterial-Austrageleitung 56 mit dem von der Vakuumpumpe der Druckdifferenz-Erzeugungsvorrichtung 130 erzeugten Vakuum beaufschlagt werden. Die Filterzentrifugen 10 gemäß den diversen Ausführungsformen können, wie in Figur 5 gezeigt, ferner einen Zentrifugendeckel 118 aufweisen, welcher zum Öffnen schwenkbar mit einem Maschinengestell bzw. Maschinengehäuse 116 verbunden ist. An dem Zentrifugendeckel 118 können zum Beispiel eine Suspension-Zuführvorrichtung 120 zum Zuführen der Suspension zu der Filtertrommel 30 sowie die Feststoffmaterial-Austragvorrichtung 50 angebracht sein. Im Geschlossen-Zustand des Zentrifugendeckels 118 verschließt dieser die Öffnung 40 der Filtertrommel 30 dicht, wobei die Suspension-Zuführvorrichtung 120 und die Feststoffmaterial-Austragvorrichtung 50 in die Filtertrommel 10 hineinragen, und umgibt gemeinsam mit dem Maschinengestell 116 die Filtertrommel 30, sodass die Filtertrommel 30 in einem zwischen dem Zentrifugendeckel 118 und dem Maschinengestell 116 abgedichtet ausgebildeten Raum 114 angeordnet ist. Ferner ist in dem Maschinengestell 116 auf Höhe eines tiefsten Punktes des Raumes 114 eine mit dem Raum 114 in Verbindung stehende Flüssigkeit-Austragvorrichtung 128 vorgesehen. Das Maschinengestell 116 weist ferner zum Beispiel zwei Trommellager 136 auf, in denen die Antriebswelle 110 zumindest im Wesentlichen horizontal gelagert ist, wobei die Filtertrommel 30 mittels der Antriebswelle 110 an dem Maschinengestell 116 zum Beispiel fliegend gelagert angebracht sein kann.

Die in den Figuren 1, 2, 3 und 5 gezeigte Feststoffmaterial-Einlassöffnung 58 erstreckt sich in Richtung der Filtertrommellängsachse L1 über zum Beispiel etwa 5% der gesamten Länge der Innenfläche 32 der Filtertrommel 30 und der Austragevorrichtungs-Arm 52 ist ferner, zum Beispiel mittels des oben erläuterten Antriebs 90, gesteuert translatorisch (entlang der Filtertrommellängsachse L1) bewegbar eingerichtet, sodass im Austragebetrieb die Feststoffmaterial-Einlassöffnung 58 mittels einer translatorischen Bewegung des Austragevorrichtungs-Arms 52 in Richtung parallel zur Filtertrommellängsachse L1 bewegbar ist, um die Feststoffmaterial-Einlassöffnung 58 parallel zur Filtertrommellängsachse L1 zu verschieben. Ferner weist die dort gezeigte Feststoffmaterial-Austragevorrichtung 50 eine zweite Klinge 64 auf, welche eine zweite Schneide 66 definiert und welche benachbart zur Feststoffmaterial-Einlassöffnung 58 und an die erste Klinge 60 angrenzend angeordnet ist, wobei die zweite Schneide 66 im Austragebetrieb orthogonal zur Filtertrommellängsachse L1 verläuft. Die translatorische Bewegung des Austragevorrichtungs-Arms 52 kann im Austragebetrieb so erfolgen, dass die zweite Klinge in (der translatorischen) Bewegungsrichtung vor der Feststoffmaterial-Einlassöffnung 58 angeordnet ist. Durch die zweite Klinge kann im Austragebetrieb, wenn das freie Armende 54 in das ausgefilterte Feststoffmaterial F eingreift, die Entstehung von Schälstaub während der translatorischen Bewegung verringert werden.

Die in der Figur 4 gezeigte, nicht erfindungsgemäße Feststoffmaterial-Einlassöffnung 58 erstreckt sich in Richtung der Filtertrommellängsachse über die gesamte Länge der Innenfläche 32 der Filtertrommel 30. Dadurch kann auf die translatorische Bewegung des Austragevorrichtungs-Arms 52 verzichtet werden.

Die Funktionsweise der in Figur 5 gezeigten Filterzentrifuge 10 ist wie folgt. Mittels der Suspension-Zuführvorrichtung 120 wird der Filtertrommel 30 im Rahmen des regulären Filterbetriebs der Filtertrommel 10 die zu filtrierende Suspension zugeführt. Die Filtertrommel 30 wird mittels der Antriebsvorrichtung 70 in Rotation versetzt, wodurch die Suspension via Fliehkraft zur Innenfläche 32 der Filtertrommel 30 gezwungen wird. Die Flüssigkeit der Suspension kann das an der Innenfläche 32 angebrachte Filtertuch 112 sowie die Filtertrommel 30 durch die Drainagebohrungen bzw. -löcher 42 durchdringen und somit aus der Filtertrommel 30 in den Raum 114 geschleudert werden. Die Flüssigkeit wird schließlich mittels der Flüssigkeit-Austragvorrichtung 128 aus dem Raum 114 abgeführt. Das Feststoffmaterial F der Suspension wird durch das Filtermedium 112 zurückgehalten und dadurch aus der Suspension ausgefiltert. Schließlich wird bei Erreichen eines ausreichenden Ausschleuderns der Flüssigkeit das an dem Filtertuch 112 als Filterkuchen anliegende ausgefilterte Feststoffmaterial F im Rahmen des Austragebetriebs der Filterzentrifuge 10 von dem Filtertuch 112 mittels der Feststoffmaterial-Austragvorrichtung 50 unter gesteuertem Drehen der Filtertrommel 30 und unter gesteuertem Bewegen des Austragevorrichtungs-Arms 52 entfernt und mittels der Feststoffmaterial-Austragvorrichtung 50 aus der Filtertrommel 10 ausgetragen. Der reguläre Filterbetrieb unterscheidet sich von dem Austragebetrieb zumindest dadurch, dass die Drehgeschwindigkeit bzw. die Drehzahl der Filtertrommel 30 im Austragebetrieb kleiner ist, z.B. um ein mehrfaches kleiner ist, als im regulären Filterbetrieb und die Position der Feststoffmaterial-Einlassöffnung 58 in der Filtertrommel 30 verschieden ist. Im Austragebetrieb ist die Feststoffmaterial-Einlassöffnung 58 in die Nähe der Filtertrommelinnenfläche bewegt, um das an der Innenfläche 32 der Filtertrommel 30 anhaftende Feststoffmaterial F aufnehmen zu können. Im regulären Filterbetrieb ist die Feststoffmaterial-Einlassöffnung 58 von der Filtertrommelinnenfläche wegbewegt, zum Beispiel in die Nähe der Filtertrommellängsachse L1 bewegt, um ein Eindringen der zu filtrierenden Suspension in die Feststoffmaterial-Austrageleitung 56 zumindest im Wesentlichen vollständig zu verhindern/unterbinden.

Die vorhergehende Beschreibung von spezifischen beispielgebenden Ausführungsformen der vorliegenden Erfindung wurde präsentiert zum Zwecke der Illustration und Beschreibung. Sie soll nicht erschöpfend sein oder die Erfindung auf die offenbarten präzisen Formen beschränken, und selbstverständlich sind viele Modifikationen und Variationen im Lichte der obigen Lehre möglich. Die beispielgebenden Ausführungsformen wurden ausgewählt und beschrieben, um bestimmte Prinzipien der Erfindung und ihre praktische Anwendung zu erläutern, um hierdurch Fachleuten zu ermöglichen, verschiedene beispielgebende Ausführungsformen der vorliegenden Erfindung sowie verschiedene Alternativen und Modifikationen davon herzustellen und anzuwenden. Es ist beabsichtigt, dass der Umfang der Erfindung durch die hieran angehängten Ansprüche und ihre Äquivalente definiert wird.

## Patentansprüche

1. Filterzentrifuge (10) zum Ausfiltern eines Feststoffmaterials (F) aus einer Suspension, die von dem Feststoffmaterial (F) und einer Flüssigkeit gebildet ist, mit
einer Filtertrommel (30), welche eine Filtertrommelinnenfläche (32) und eine Filtertrommellängsachse (L1) definiert, die in einem Winkel von nicht mehr als 30° zur Horizontalen angeordnet ist, und welche um die Filtertrommellängsachse (L1) drehbar ist, und
einer Feststoffmaterial-Austragevorrichtung (50) zum Austragen des ausgefilterten Feststoffmaterials (F) aus der Filtertrommel (30) im Rahmen eines Austragebetriebs der Filterzentrifuge (10), wobei die Feststoffmaterial-Austragevorrichtung (50) aufweist einen Austragevorrichtungs-Arm (52) mit einem freien Armende (54) und eine Feststoffmaterial-Austrageleitung (56), welche an dem Arm (52) ausgebildet ist und über welche das ausgefilterte Feststoffmaterial (F) aus der Filtertrommel (30) herausführbar ist und welche eine Feststoffmaterial-Einlassöffnung (58) hat, welche benachbart zu dem freien Armende (54) angeordnet ist und über welche das ausgefilterte Feststoffmaterial (F) von der Filtertrommel (30) in die Feststoffmaterial-Austrageleitung (56) gelangen kann, wobei der Austragevorrichtungs-Arm (52) gesteuert bewegbar eingerichtet ist, sodass im Austragebetrieb die Feststoffmaterial-Einlassöffnung (58) mittels einer Bewegung des Austragevorrichtungs-Arms (52) in die Nähe der Filtertrommelinnenfläche (32) bewegbar ist, um das an der Innenfläche (32) der Filtertrommel (30) anhaftende Feststoffmaterial (F) aufnehmen zu können, und wobei im Austragebetrieb die in die Nähe der Filtertrommelinnenfläche (32) bewegte Feststoffmaterial-Einlassöffnung (58) bezüglich der Filtertrommellängsachse (L1) in der unteren Hälfte der Filtertrommel (30) angeordnet ist, wobei die Feststoffmaterial-Austragevorrichtung (50) ferner eine erste Klinge (60) aufweist, welche eine erste Schneide (62) definiert und welche benachbart zur Feststoffmaterial-Einlassöffnung (58) angeordnet ist,
wobei sich die Feststoffmaterial-Einlassöffnung (58) in Richtung der Filtertrommellängsachse (L1) über weniger als die Hälfte der gesamten Länge der Innenfläche (32) der Filtertrommel (30) erstreckt, und wobei der Austragevorrichtungs-Arm (52) ferner gesteuert translatorisch bewegbar eingerichtet ist, sodass im Austragebetrieb die Feststoffmaterial-Einlassöffnung (58) mittels einer translatorischen Bewegung des Austragevorrichtungs-Arms (52) in Richtung parallel zur Filtertrommellängsachse (L1) bewegbar ist, um die Feststoffmaterial-Einlassöffnung (58) parallel zur Filtertrommellängsachse (L1) zu verschieben.

2. Filterzentrifuge (10) gemäß Anspruch 1, wobei im Austragebetrieb die in die Nähe der Filtertrommelinnenfläche (32) bewegte Feststoffmaterial-Einlassöffnung (58) in einem Winkelbereich (ϕ) angeordnet ist, der sich um die Filtertrommellängsachse (L1) herum um nicht mehr als 45° zur Vertikalen (V) erstreckt.

3. Filterzentrifuge (10) gemäß Anspruch 1 oder 2, ferner mit einer Druckdifferenz-Erzeugungsvorrichtung (130) zum Erzeugen einer Druckdifferenz zwischen der Feststoffmaterial-Einlassöffnung (58) und einem Inneren der Feststoffmaterial-Austrageleitung (56) derart, dass der Druck in der Feststoffmaterial-Austrageleitung (56) kleiner ist als in der äußeren Umgebung der Feststoffmaterial-Einlassöffnung (58).

4. Filterzentrifuge (10) gemäß einem der Ansprüche 1-3, wobei die erste Schneide (62) zumindest im Austragebetrieb zumindest im Wesentlichen parallel zur Filtertrommellängsachse (L1) verläuft.

5. Filterzentrifuge (10) gemäß einem der Ansprüche 1-4, wobei die Feststoffmaterial-Austragevorrichtung (50) ferner eine zweite Klinge (64) aufweist, welche eine zweite Schneide (66) definiert und welche benachbart zur Feststoffmaterial-Einlassöffnung (58) und optional an die erste Klinge (60) angrenzend angeordnet ist, wobei die zweite Schneide (66) zumindest im Austragebetrieb zumindest im Wesentlichen orthogonal zur Filtertrommellängsachse (L1) verläuft.

6. Filterzentrifuge (10) gemäß einem der Ansprüche 1-5, ferner mit einer Steuervorrichtung (S) und einem Drehantrieb (70), welcher an die Steuervorrichtung (S) angeschlossen ist, wobei die Steuervorrichtung (S) eingerichtet ist, um den Drehantrieb (70) im Austragebetrieb so zu steuern, dass eine Drehgeschwindigkeit der Filtertrommel (30) im Vergleich zu einem regulären Filterbetrieb kleiner ist.

7. Filterzentrifuge (10) gemäß Anspruch 6, wobei die Steuervorrichtung derart eingerichtet ist, dass von ihr der Drehantrieb im Austragebetrieb derart gesteuert wird, dass die Drehzahl der Filtertrommel derart ist, dass das Verhältnis zwischen der auf das in der Filtertrommel vorliegende ausgefilterte Feststoffmaterial wirkenden Zentrifugalbeschleunigung und der Erdbeschleunigung kleiner als eins ist.

8. Filterzentrifuge (10) gemäß Anspruch 6 oder 7, wobei die Feststoffmaterial-Austragevorrichtung (50) einen an die Steuervorrichtung (S) angeschlossenen Antrieb (90) aufweist, wobei die Steuervorrichtung (S) eingerichtet ist, um den Antrieb (90) so zu steuern, dass das freie Armende (54) im Austragebetrieb mechanischen Druck auf das an der Innenfläche (32) der Filtertrommel (30) anhaftende Feststoffmaterial (F) ausübt.

9. Filterzentrifuge (10) gemäß einem der Ansprüche 1-8, wobei der Austragevorrichtungs-Arm (52) ein Hohlkörper mit einem inneren Hohlraum ist und die Feststoffmaterial-Austrageleitung (56) von dem Hohlraum des Hohlkörpers gebildet ist.

10. Filterzentrifuge (10) gemäß einem der Ansprüche 1-9, wobei der Austragevorrichtungs-Arm (52) um eine im Abstand zum freien Armende (54) angeordnete Schwenkachse (L2) schwenkbar ist, welche parallel zur Filtertrommellängsachse (L1) und versetzt dazu ist.

11. Verfahren zum Betreiben einer Filterzentrifuge gemäß einem der vorherigen Ansprüche, wobei die Filtertrommel im Austragebetrieb mit einer derartigen Drehzahl gedreht wird, dass das Verhältnis zwischen der auf das in der Filtertrommel vorliegende ausgefilterte Feststoffmaterial wirkenden Zentrifugalbeschleunigung und der Erdbeschleunigung kleiner als eins ist.

## Claims

1. Filter centrifuge (10) for filtering a solid material (F) out of a suspension formed by the solid material (F) and a liquid, including
a filter drum (30) which defines a filter drum inner surface (32) and a filter drum longitudinal axis (L1) disposed at an angle of no more than 30° to the horizontal and rotatable about the filter drum longitudinal axis (L1); and
a solid material discharge device (50) for discharging the filtered-out solid material (F) from the filter drum (30) in the context of a discharge operation of the filter centrifuge (10), the solid material discharge device (50) comprising a discharge device arm (52) having a free arm end (54) and a solid material discharge line (56), which is formed on the arm (52) and through which the filtered-out solid material (F) can be led out of the filter drum (30) and which has a solid material inlet opening (58) which is arranged adjacent to the free arm end (54) and through which the filtered-out solid material (F) can get from the filter drum (30) into the solid material discharge line (56), wherein the discharge device arm (52) is configured to be controllably movable so that in discharge operation the solid material inlet opening (58) is movable by means of a movement of the discharge device arm (52) near the filter drum inner surface (32) to be able to receive the solid material (F) adhering to the inner surface (32) of the filter drum (30), and wherein, in discharge operation, the solid material inlet opening (58) moved near the filter drum inner surface (32) is disposed in the lower half of the filter drum (30) with respect to the filter drum longitudinal axis (L1), wherein the solid material discharge device (50) further comprises a first blade (60) defining a first cutting edge (62) and disposed adjacent to the solid material inlet opening (58),
wherein the solid material inlet opening (58) extends in the direction of the filter drum longitudinal axis (L1) over less than half of the entire length of the inner surface (32) of the filter drum (30), and wherein the discharge device arm (52) is further configured to be controllably movable in translation so that, in discharge operation, the solid material inlet opening (58) is movable by means of a translation movement of the discharge device arm (52) in the direction parallel to the filter drum longitudinal axis (L1), in order to displace the solid material inlet opening (58) parallel to the filter drum longitudinal axis (L1).

2. Filter centrifuge (10) according to claim 1, wherein, in discharge operation, the solid material inlet opening (58) moved near the filter drum inner surface (32) is arranged in an angular range (ϕ) extending around the filter drum longitudinal axis (L1) by not more than 45° to the vertical (V).

3. Filter centrifuge (10) according to claim 1 or 2, further having a pressure difference generating device (130) for generating a pressure difference between the solid material inlet opening (58) and an interior of the solid material discharge line (56) such that the pressure in the solid material discharge line (56) is lower than in the outer periphery of the solid material inlet opening (58) .

4. Filter centrifuge (10) according to any one of claims 1 to 3, wherein the first cutting edge (62), at least in the discharge operation, extends at least substantially parallel to the filter drum longitudinal axis (L1).

5. Filter centrifuge (10) according to any one of claims 1-4, the solid material discharge device (50) further comprising a second blade (64) defining a second cutting edge (66) and being arranged adjacent to the solid material inlet opening (58) and optionally adjacent to the first blade (60), wherein the second cutting edge (66) extends at least substantially orthogonally to the filter drum longitudinal axis (L1) at least in discharge operation.

6. Filter centrifuge (10) according to any one of claims 1 to 5, further having a control device (S) and a rotary drive (70) connected to the control device (S), wherein the control device (S) is configured to control the rotary drive (70) in discharge operation such that a rotational speed of the filter drum (30) is lower compared to a regular filter operation.

7. Filter centrifuge (10) according to claim 6, wherein the control device is configured to control the rotary drive in the discharge operation such that the rotational speed of the filter drum is such that the ratio between the centrifugal acceleration acting on the filtered solid material present in the filter drum and the acceleration due to gravity is less than one.

8. Filter centrifuge (10) according to claim 6 or 7, the solid material discharge device (50) comprising a drive (90) connected to the control device (S), wherein the control device (S) is configured to control the drive (90) such that the free arm end (54) exerts mechanical pressure on the solid material (F) adhering to the inner surface (32) of the filter drum (30) in discharge operation.

9. Filter centrifuge (10) according to any one of claims 1 to 8, wherein the discharge device arm (52) is a hollow body having an internal cavity and the solid material discharge line (56) is formed by the cavity of the hollow body.

10. Filter centrifuge (10) according to any one of claims 1 to 9, wherein the discharge device arm (52) is pivotable about a pivot axis (L2) arranged at a distance from the free arm end (54), which is parallel to and offset from the filter drum longitudinal axis (L1).

11. Method of operating a filter centrifuge according to any one of the preceding claims, wherein the filter drum is rotated in discharge operation at such a rotational speed that the ratio between the centrifugal acceleration acting on the filtered solid material present in the filter drum and the acceleration of gravity is less than one.

## Revendications

1. Centrifugeuse filtrante (10) pour le filtrage d'une matière solide (F) hors d'une suspension, qui est constituée de la matière solide (F) et d'un liquide, avec
un tambour filtrant (30), qui définit une surface interne de tambour filtrant (32) et un axe longitudinal de tambour filtrant (L1), qui est disposé selon un angle non supérieur à 30° par rapport à l'horizontale et qui peut tourner autour de l'axe longitudinal du tambour filtrant (L1) et
un dispositif d'évacuation de matière solide (50) pour l'évacuation de la matière solide (F) filtrée hors du tambour filtrant (30) dans le cadre d'un processus d'évacuation de la centrifugeuse filtrante (10), dans lequel le dispositif d'évacuation de matière solide (50) comprend un bras de dispositif d'évacuation (52) avec une extrémité de bras libre (54) et une conduite d'évacuation de matière solide (56), qui est formée sur le bras (52), et par l'intermédiaire de laquelle la matière solide (F) filtrée peut être évacuée hors du tambour filtrant (30) et qui comprend une ouverture d'entrée de matière solide (58) qui est disposée près de l'extrémité de bras libre (54) et par l'intermédiaire de laquelle la matière solide (F) filtrée par le tambour filtrant (30) peut arriver dans la conduite d'évacuation de matière solide (56), dans lequel le bras du dispositif d'évacuation (52) est conçu de façon à être mobile de manière contrôlée, de façon à ce que, dans le processus d'évacuation, l'ouverture d'entrée de matière solide (58) peut être déplacée, au moyen d'un déplacement du bras du dispositif d'évacuation (52) à proximité de la surface interne (32) du tambour filtrant (30), afin de pouvoir capter la matière solide (F) adhérant à la surface interne du tambour filtrant (32) et dans lequel, dans le processus d'évacuation, l'ouverture d'entrée de la matière solide (58) déplacée à proximité de la surface interne du tambour filtrant (32) est disposée, par rapport à l'axe longitudinal du tambour filtrant (L1), dans la moitié inférieure du tambour filtrant (30), dans lequel le dispositif d'évacuation de la matière solide (50) comprend en outre une première lame (60) qui définit un premier tranchant (62) et qui est disposée près de l'ouverture d'entrée de matière solide (58),
dans lequel l'ouverture d'entrée de matière solide (58) s'étend dans la direction de l'axe longitudinal du tambour filtrant (L1) sur moins de la moitié de la longueur totale de la surface interne (32) du tambour filtrant (30) et dans lequel le bras du dispositif d'évacuation (52) est en outre conçu de façon à être mobile en translation de manière contrôlée, de façon à ce que, dans le processus d'évacuation, l'ouverture d'entrée de matière solide (58) peut être déplacée au moyen d'un déplacement en translation du bras du dispositif d'évacuation (52) dans une direction parallèle à l'axe longitudinal du tambour filtrant (L1), afin de déplacer l'ouverture d'entrée de matière solide (58) parallèlement à l'axe longitudinal du tambour filtrant (L1).

2. Centrifugeuse filtrante (10) selon la revendication 1, dans laquelle, dans le processus d'évacuation, l'ouverture d'entrée de matière solide (58) placée à proximité de la surface interne du tambour filtrant (32) est disposée dans une zone angulaire (ϕ) qui s'étend autour de l'axe longitudinal du tambour filtrant (L1) sur pas plus de 45° par rapport à la verticale (V).

3. Centrifugeuse filtrante (10) selon la revendication 1 ou 2, en outre avec un dispositif de production d'une différence de pression (130) pour la production d'une différence de pression entre l'ouverture d'entrée de matière solide (58) et un intérieur de la conduite d'évacuation de matière solide (56) de façon à ce que la pression dans la conduite d'évacuation de matière solide (56) soit inférieure à la pression dans l'environnement externe de l'ouverture d'entrée de matière solide (58).

4. Centrifugeuse filtrante (10) selon l'une des revendications 1 à 3, dans laquelle le premier tranchant (62) s'étend, au moins dans le processus d'évacuation, au moins globalement parallèlement à l'axe longitudinal du tambour filtrant (L1).

5. Centrifugeuse filtrante (10) selon l'une des revendications 1 à 4, dans laquelle le dispositif d'évacuation de matière solide (50) comprend en outre une deuxième lame (64) qui définit un deuxième tranchant (66) et qui est disposée près de l'ouverture d'entrée de matière solide (58) et de manière adjacente à la première lame (60), dans laquelle le deuxième tranchant (66) s'étend, dans le processus d'évacuation, de manière au moins globalement orthogonale par rapport à l'axe longitudinal du tambour filtrant (L1).

6. Centrifugeuse filtrante (10) selon l'une des revendications 1 à 5, en outre avec un dispositif de commande (S) et un entraînement rotatif (70), qui est connecté au dispositif de commande (S), dans lequel le dispositif de commande (S) est conçu pour contrôler l'entraînement rotatif (70), dans le processus d'évacuation, de façon à ce qu'une vitesse de rotation du tambour filtrant (30) soit inférieure à un fonctionnement de filtrage régulier.

7. Centrifugeuse filtrante (10) selon la revendication 6, dans laquelle le dispositif de commande est conçu de façon à ce qu'il contrôle l'entraînement rotatif, dans le fonctionnement d'évacuation, de façon à ce que la vitesse de rotation du tambour filtrant soit telle que le rapport entre l'accélération centrifuge agissant sur la matière solide filtrée présente dans le tambour filtrant et l'accélération de la pesanteur soit inférieur à un.

8. Centrifugeuse filtrante (10) selon la revendication 6 ou 7, dans laquelle le dispositif d'évacuation de matière solide (50) comprend un entraînement (90) connecté au dispositif de commande (S), dans laquelle le dispositif de commande (S) est conçu pour contrôler l'entraînement (90) de façon à ce que l'extrémité de bras libre (54) exerce, dans le fonctionnement d'évacuation, une pression mécanique sur la matière solide (F) adhérant à la surface interne (32) du tambour filtrant (30).

9. Centrifugeuse filtrante (10) selon l'une des revendications 1 à 8, dans laquelle le bras du dispositif d'évacuation (52) est un corps creux avec une cavité interne et la conduite d'évacuation de matière solide (56) est constituée de la cavité du corps creux.

10. Centrifugeuse filtrante (10) selon l'une des revendications 1 à 9, dans laquelle le bras du dispositif d'évacuation (52) peut pivoter autour d'un axe de pivotement (L2), disposé à distance de l'extrémité de bras libre (54), qui est parallèle à l'axe longitudinal du tambour filtrant (L1) et est décalé par rapport à celui-ci.

11. Procédé de fonctionnement d'une centrifugeuse selon l'une des revendications précédentes, dans lequel le tambour filtrant tourne, dans le processus d'évacuation, avec une vitesse de rotation telle que le rapport entre l'accélération centrifuge agissant sur la matière solide filtrée se trouvant dans le tambour filtrant et l'accélération de la pesanteur soit inférieur à un.
